# FASCICULE DE BREVET EUROPEEN

(11) **EP 0 557 140 B1**
(45) Date de publication et mention de la délivrance du brevet: **19.11.1997**
(21) Numéro de dépôt: 93400050.6
(22) Date de dépôt: 13.01.1993
(51) Int. Cl.: B29C 53/56, B65H 81/00, C03C 14/00

(54) **Procédé de dépose au contact à chaud de matériau composite fibré à matrice vitreuse et dispositif pour la mise en ouevre du procédé**
Verfahren zum Aufbauen eines Faserverbundwerkstoffes mit Glasmatrix mittels Wickeln und Erwärmung und Vorrichtung zur Durchführung des Verfahrens
Method for hot contact depositing of fibrous composite material with glass matrix and device for carrying out the method

(30) Priorité: 14.01.1992 FR 9200288
(43) Date de publication de la demande: 25.08.1993
(73) Titulaire: AEROSPATIALE Société Nationale Industrielle, 75781 Paris Cédex 16 (FR)
(72) Inventeur: Donzac, Jean-Marc, F-33160 St. Medard en JallesCEDEX (FR); Darrieux, Jean-Louis, F-33160 St. Medard en Jalles CEDEX (FR); Cahuzac, Georges, F-33110 Le Bouscat (FR); Jamet, Jean, F-33360 Carignan de Bordeaux (FR)
(74) Mandataire: Lhuillier, René

(56) Documents cités:
- EP-A- 0 198 744
- EP-A- 0 423 954
- FR-A- 2 527 517
- FR-A- 2 620 083
- FR-A- 2 656 826
- US-A- 4 412 854
- US-A- 4 750 960
- US-A- 4 960 451
- COMPOSITES. vol. 26, no. 3, Juin 1986, PARIS FR pages 121 - 128 J.L. TISNE 'Bobinage de fibres continues imprégnées de résine thermoplastique.'
- GEC JOURNAL OF RESEARCH. vol. 6, no. 1, 1988, CHELMSFORD GB pages 44 - 49 A.R. HYDE 'Fibre reinforced glass and ceramic composites.'
- PATENT ABSTRACTS OF JAPAN vol. 12, no. 432 (M-763)(3279) 15 Novembre 1988 & JP-A-63 165 275 (TORAY IND INC) 8 Juillet 1988

## Description

L'invention se situe dans le domaine des techniques d'élaboration de structures porteuses à haute température, d'un matériau composite fibré à matrice vitreuse, et a plus précisément pour objet un procédé qui recrée localement par dépose au contact, en continu et à chaud, les conditions de température, de pression et d'atmosphère telles que réalisées avec les techniques connues de pressage à chaud.

On connaît par le document 4533 Composites, 26 (1986) Mai/Juin, No.3, Paris, France, un procédé d'enroulement filamentaire de fibres continues imprégnées de résine thermoplastique.

Le besoin de ces structures fibrées pouvant avoir des formes diverses, cylindriques, coniques, en forme de plaques ou de dômes, formes simples ou complexes apparaît lorsqu'on recherche des structures composites ayant des performances mécaniques intéressantes dans les plages de températures allant au-delà de celles supportables par les composites à matrices organiques. C'est pourquoi on utilise des matériaux composites fibrés à matrice vitreuse dans lesquels les fibres ou fils de renfort utilisés sont par exemple SiC, C, Al₂O₃, SiO₂ etc... Les matrices vitreuses peuvent être constituées par au moins un oxyde de type SiO₂, Al₂O₃, ZrO₂, B₂O₃, ou les oxydes alcalins ou alcalino-terreux etc...

Les procédés connus pour réaliser des articles composites de formes complexes à matrice de verre renforcée de fibres apparaissent inappropriés essentiellement par le fait qu'un renforcement des articles composites par des fibres continues, obtenu par l'utilisation de rubans, de feutres ou de papiers de fibres alignées qui sont infiltrées par des pâtes de verre, découpés, puis orientés et empilés dans une matrice pour le pressage à plat, permet d'obtenir seulement un arrangement plat des fibres. Lesdits rubans ne pourraient être déformés dans des formes complexes sans subir une sérieuse déformation des fibres. Pour pallier à cet inconvénient, on connaît une solution qui consiste à préimprégner des feuilles à renforcement de fibres d'un liquide contenant un liant polymère thermoplastique et une poudre de verre. Puis les feuilles sont découpées en modèle particulier de la partie composite complexe à réaliser, et elles sont empilées sur des préformes qui sont moulées à chaud. Enfin on chauffe l'article formé pour décomposer et enlever le liant temporaire avant de presser à chaud l'article traité pour former le produit composite final de haute résistance, comme décrit dans le FR-A 2 527 517.

Le pressage à chaud de ces matériaux peut être assuré par au moins un élément de moule en matériau résistant à hautes températures, qui possède bien entendu des propriétés de résistance mécanique mais aussi des propriétés de conductivité thermique anisotrope de telle sorte que le transfert thermique préférentiel s'effectue dans le four de pressage en direction des zones de la pièce les plus éloignées des moyens de chauffage du four.

On connaît aussi par le FR-A 2 620 083 un procédé de fabrication d'un composite de verre renforcé de fibres dans lequel on projète à l'état fondu par plasma de la poudre de verre sur des fibres pour obtenir une ébauche dans laquelle une matrice de verre est liée aux fibres. Mais cette ébauche doit aussi être soumise à un pressage à chaud, après cette opération d'imprégnation.

D'un autre côté, pour réaliser des pièces complexes creuses à partir d'un matériau composite fibré à matrice vitreuse, il est apparu préférable à la Demanderesse, comme décrit dans la demande de brevet français N°. 91 14860, d'utiliser un procédé qui consiste à introduire dans un volume délimité par les parois d'un moule une quantité de matériau nécessaire et suffisante pour obtenir le composite final, à placer dans le matériau des inserts amovibles qui correspondent aux zones creuses de la pièce finale, à appliquer à chaud sur l'ensemble une pression mécanique uniformément répartie, à extraire du moule l'ensemble pièce-inserts, et enfin à retirer les inserts amovibles.

Toutefois, pour réaliser des pièces en une seule opération et sans avoir recours à un moulage à chaud qui induit la mise en oeuvre d'un matériel coûteux et un temps de chauffage non négligeable, la Demanderesse a eu l'idée de réaliser directement ces pièces complexes denses par dépose au contact et écrasement simultané à chaud sur un mandrin d'un matériau composite fibré dans des conditions identiques de température, de pression et d'atmosphère aux techniques de pressage à chaud.

Un objet principal de l'invention consiste donc en un procédé de dépose au contact et à chaud de matériau composite fibré à matrice vitreuse par dépose au contact sur un mandrin d'une pluralité de couches de matériau composite fibré orientées dans plusieurs directions en recréant localement au niveau du point de contact des fils sur les couches précédentes des conditions de température telles que les fils imprégnés soient écrasés sur le matériau vitreux en fusion, procédé qui consiste à réaliser des âmes de formes variées par dépose au contact sur un mandrin, puis après enlèvement du mandrin, à réaliser des peaux sur les âmes par dépose de fils au contact pour obtenir des pièces creuses et denses de formes complexes.

Un autre objet principal de l'invention consiste en un dispositif pour la mise en oeuvre dudit procédé de dépose, utilisant une tête de dépose montée sur un outil faisant partie d'une machine distributrice de fils et équipée de galets d'entraînement et d'une roulette de dépose du fil, ladite tête étant mobile en translation par rapport à l'interface tête-machine distributrice et rappelée contre le mandrin par un ressort, dispositif selon lequel, sur le support de la roulette de dépose est monté un pistolet à plasma dont la buse de sortie est orientée en direction de la base de la roulette et du point d'application du fil sur le mandrin 1.

Le support fait partie de la tête de dépose elle-même montée sur une glissière 16.

En outre et avantageusement, le mandrin et la roulette sont enduits d'un matériau utilisé comme démoulant.

Des caractéristiques particulières et avantages de l'invention ressortiront de la description qui va suivre d'exemples de réalisation faisant référence aux dessins annexés qui représentent :
Figures 1 et 2 des vues schématiques en coupe du dispositif de dépose.
Figure 3 une vue plus détaillée en coupe verticale de la tête de dépose et de l'outil.
Figure 4 une vue en perspective d'un demi-renfort
Figures 5 et 6 des vues schématiques de la tête de dépose selon la figure 3 durant deux phases successives de fonctionnement.
Figures 7 et 8 des exemples de déposes effectuées.
Figures 9 et 10 des vues schématiques en perspective de panneaux obtenus.
Figure 11 une vue générale de la machine de dépose.

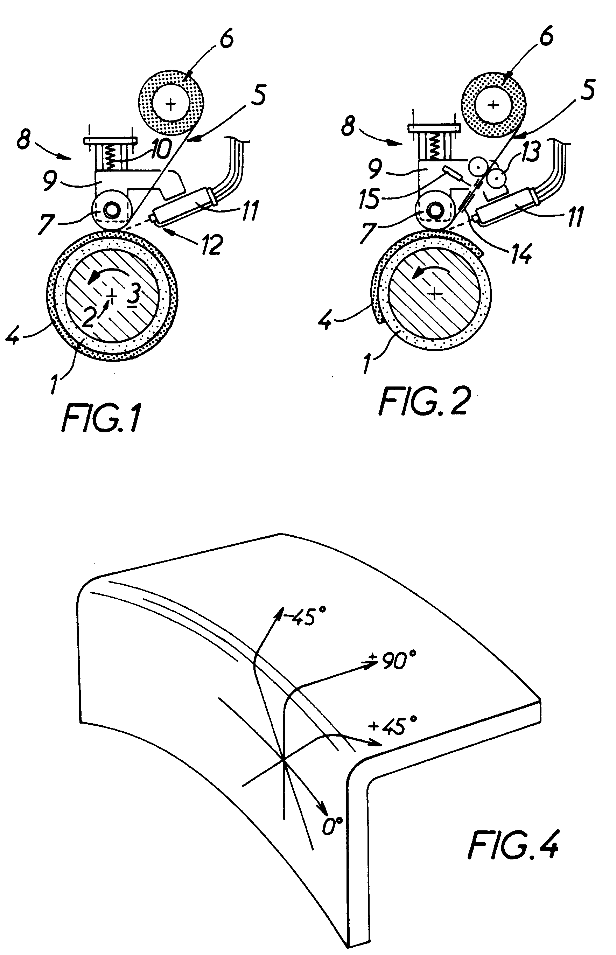

On a représenté à la figure 1 un mandrin support 1, en matériau adapté de type à base de carbone, voire réfractaire, matériau de haute performance enduit de graphite coloïdal utilisé comme démoulant, de forme simple puisque cylindrique, et qui tourne sur son axe 2 dans le sens de la flèche 3. Cette figure illustre le principe de base de l'invention pour la dépose de fil en continu en vue de la réalisation d'une pièce cylindrique 4 ne comportant que des fibres circonférentielles. Le fil préimprégné 5 délivré par une bobine 6 est appliqué sur le mandrin par une roulette de dépose 7 faisant partie d'une tête de dépose 8. La roulette est disposée sur un support métallique 9 qui fait partie de la tête de dépose 8 elle-même montée sur une glissière.

Un ressort réglable 10 applique la roulette sur le mandrin 1 avec une certaine pression ajustable. Sur le support 9 est également monté un pistolet à plasma 11 dont la buse de sortie 12 est orientée en direction de la base de la roulette c'est-à-dire en direction du point d'application du fil 5 sur le mandrin. La roulette de dépose 7 est avantageusement réalisée en matériau de même nature que le mandrin pour éviter le collage du fil. L'un et l'autre peuvent en outre être refroidis à l'aide d'un fluide. Le choix du matériau retenu est fonction des conditions de température, de pression et d'atmosphère exigées pour la mise en oeuvre du matériau composite. Le pistolet à plasma, connu en soi, permet d'atteindre des températures aptes au travail du verre, par exemple dans une plage comprise entre 500° et 1500°C. De façon également connue, le pistolet est muni autour du dar de chauffe de plusieurs trous pour l'injection de gaz neutre.

La tête de dépose décrite précédemment peut être montée sur différents types de machine. Par rotation du mandrin 1, le fil 5 délivré par la bobine, est entraîné sous la roulette 7 qui l'écrase à l'endroit chauffé à la température de fusion du verre par le pistolet. Les couches successives de fils sont écrasées et assemblées entre elles par la roulette sur le verre en fusion. Les fils ainsi déposés peuvent être des fils ou des bandes de fils renforts imprégnés de poudre de verre, maintenus par un liant organique ou des fils renforts combinés avec des fibres de verre appliqués les uns contre les autres ou préalablement mixés ou encore des joncs pultrudés constitués de fil renforts enrobés de verre avec éventuellement des charges par exemple de carbone pour augmenter la conductivité du matériau fini. La dépose en continu illustrée à la figure 1 permet d'obtenir la pièce cylindrique 4.

Si l'on veut obtenir une portion de cylindre c'est-à-dire une pièce en forme de tuile, on assure alors la dépose discontinue de fils à l'aide d'une tête de dépose similaire à la précédente et représentée à la figure 2. La différence consiste à équiper le support 9 de deux galets d'entraînement motorisés 13 qui permettent d'envoyer le fil 5, provenant de la bobine 6 sous la roulette de dépose 7 et cela par l'intermédiaire d'un tube 14 qui guide le fil. En outre un coupe fil 15 est prévu en aval des galets 13. Le fonctionnement est analogue à celui de la dépose en continu, sauf par le fait que l'on peut démarrer et interrompre la dépose de fil à l'endroit voulu grâce à l'action combinée du coupe fil et des galets d'entraînement.

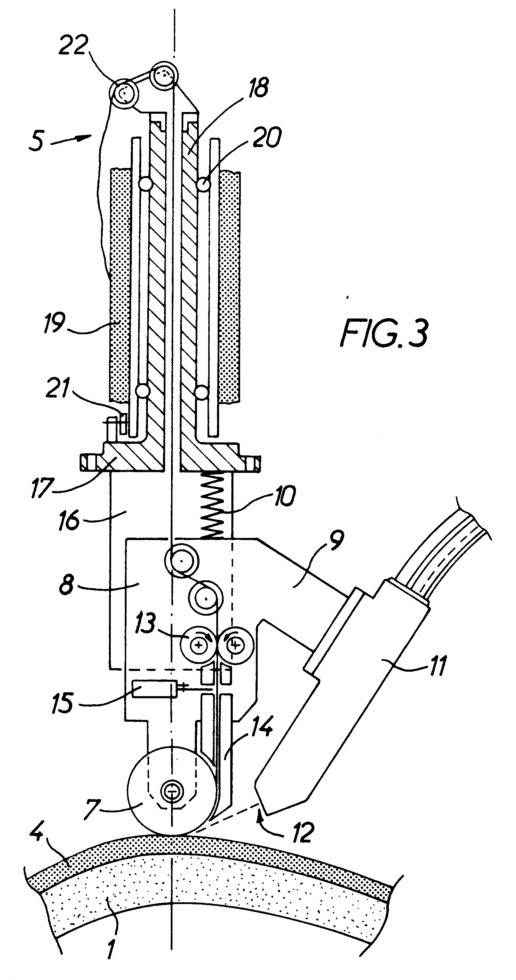

La figure 3 représente plus en détail un ensemble d'un outil de dépose au contact en discontinu. On y retrouve sous les mêmes références les divers éléments précédemment décrits. La tête de dépose 8 est montée sur une glissière 16 elle-même solidaire d'une collerette 17 de fixation à une machine.

La surface contre laquelle s'appuie le ressort 10 constitue l'interface entre la tête de dépose 8 et un outil 18 qui fait partie de la machine distributrice de fil. L'outil en question sert de support à une bobine 19 fournissant le fil 5, bobine qui peut tourner librement sur l'outil grâce à des roulements 20. Un frein réglable 21 peut agir sur la rotation de la bobine. Le fil 5 émis par la bobine est guidé par des poulies de renvoi 22 et traverse l'outil par un puits central pour atteindre la tête de dépose 8.

Avec cet outil de dépose au contact de fils discontinus, on pourrait bien évidemment effectuer une dépose continue pour réaliser des pièces de révolution du genre cylindres, cônes, sphères etc...

Dans une variante de réalisation, ainsi que le montrent schématiquement les figures 1 et 2, la bobine de fil, au lieu d'être montée sur l'outil, est à l'extérieur. Cela permet d'avoir une quantité de fil stocké plus importante et d'utiliser du jonc pultrudé stocké sur des bobines disques de grand diamètre, du fait que la raideur du jonc est plus importante que celle du fil. La tête de dépose est mobile en translation par rapport à l'interface, mais pas en rotation. Cela permet au fil d'être plaqué sur la pièce par le ressort 10, plus ou moins bandé selon la pression recherchée.

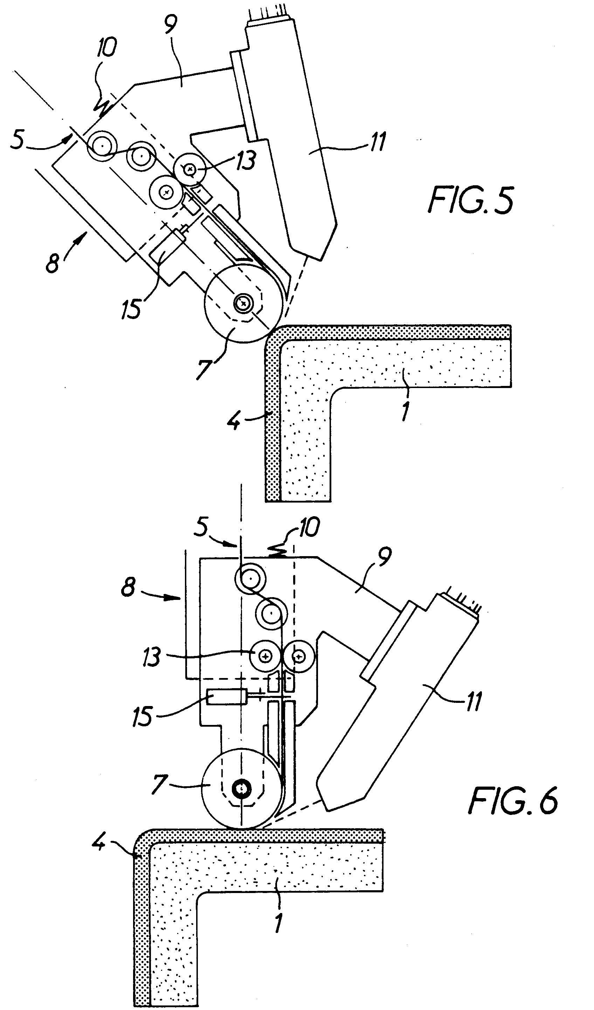

On peut ainsi obtenir une pièce de forme complexe telle que celle illustrée à la figure 4. Il s'agit d'une équerre courbe réalisée en déposant une première couche de fils jointifs parallèles à la courbe puis par dessus, une seconde couche de fils jointifs à 90° de la première, puis une troisième couche inclinée à +45°, une quatrième à -45°, puis une cinquième à nouveau à 0° et ainsi de suite jusqu'à l'obtention de l'épaisseur et du nombre de couches désirées.

Pour déposer un fil au contact sur un support afin de réaliser une première nappe ou une nappe jointive à la précédente ou un ruban, la première opération consiste à déplacer la tête de dépose 8 avec l'outil porteur jusqu'à ce que la roulette de dépose 7 vienne en butée contre la pièce 4 (figure 5). La partie de fil 5 qui dépasse de la roulette et qui n'est pas plaquée sur la pièce, le sera lors du retour de la tête quand elle déposera au contact la nappe jointive suivante. La descente de l'outil est arrêtée et la tête est appliquée sur la pièce sous l'action du ressort 10. La pièce 4 étant entraînée en rotation, la roulette de dépose 7 roule sur sa surface. Au moment du départ de la dépose du fil celui-ci est poussé par les galets d'entraînement 13 sur les quelques millimètres nécessaires pour souder le fil sur la couche du dessous.

Il est ainsi possible de déposer du fil sur une forme complexe, convexe ou concave. La figure 6 montre qu'après la dépose au contact du fil 5, la lame de coupe 15 entre en action pour le couper et l'on comprend que la partie restante du fil entre la lame et la roulette de dépose 7 sera plaquée par cette dernière, sur la pièce.

L'opération de dépose étant terminée, on remontera la tête de dépose puis on injectera si nécessaire un nouveau fil 5 entre les galets d'entraînement 13. La tête de dépose est prête pour déposer au contact, par exemple une nappe jointive à la précédente.

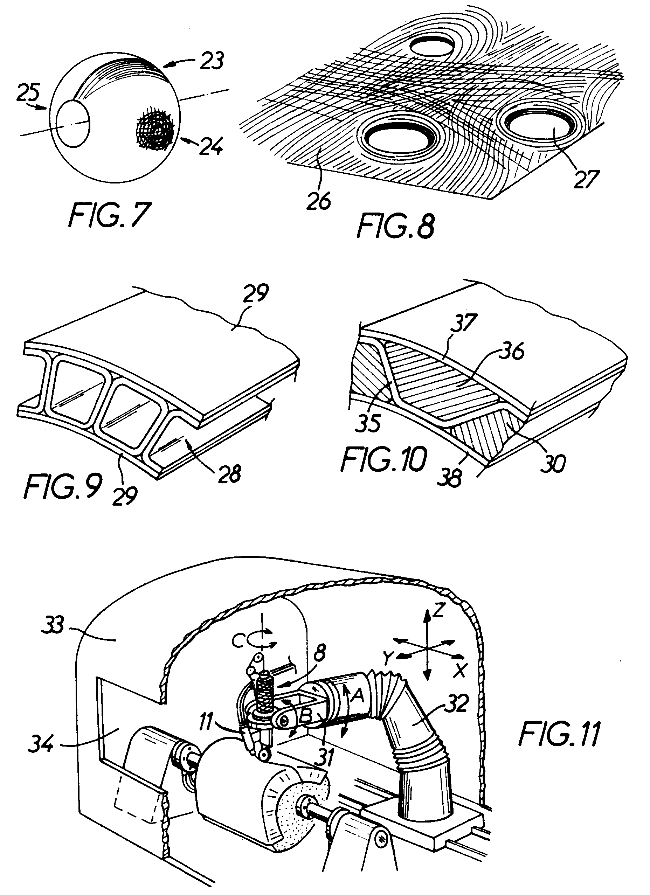

La possibilité de démarrer et d'arrêter la dépose d'un fil permet de réaliser des couches non développables avec des motifs découlant des surfaces des formes complexes. Ainsi peut-on déposer les portions 23 de trajectoires et des zones renforcées 24 sur un support 25 de forme sphérique (figure 7). D'une façon générale on peut combiner toute sorte de déposes sur des formes variées. Cette technique est particulièrement intéressante pour obtenir sur un support 26 de forme quelconque des portions de trajectoires complexes qui permettent par exemple d'éviter mais aussi de renforcer des zones comportant des trous 27 comme le montre la figure 8.

On voit à la figure 9 une pièce creuse réalisée à l'aide du dispositif de dépose au contact, sans utiliser d'insert comme ceux décrits dans la demande de brevet n° 91 14860 au nom de la Demaderesse, on réalise des âmes 28 de formes variées par dépose au contact sur un mandrin. Puis on enlève les mandrins et on assemble par leurs extrémités les âmes entre elles à l'aide d'un outillage non représenté. On réalise par dépose au contact une peau 29 sur les âmes puis une autre peau sur la face opposée. On obtient par ce procédé des pièces creuses denses finies.

On peut réaliser aussi des pièces creuses avec des inserts amovibles comme le montre la figure 10. Par exemple on réalise une peau interre 35 par dépose au contact sur des inserts 30 à pointe orientée vers le haut. Puis on met en place un autre insert 36 à pointe orientée vers le bas qui se place dans l'évidement ménagé par les premiers. On recouvre l'ensemble d'une peau supérieure 37, puis de l'autre côté une peau inférieure 38 après avoir retourné la pièce. Ensuite on retire les inserts. Si on veut réaliser des pièces sandwich, on utilise des inserts non amovibles qui restent à l'intérieur de la pièce finie.

La machine permettant de réaliser les pièces par dépose de fil au contact à chaud est avantageusement une machine telle que représentée à la figure 11. La tête de dépose 8 avec son pistolet à plasma 11 est montée sur le poignet 31 d'un bras de robot 32 qui peut s'orienter selon six axes de mouvements, trois axes de déplacements linéaires X, Y et Z et trois axes de déplacements rotatifs A, B, C. De plus la pièce 4 en cours de réalisation peut tourner et se déplacer en translation sur son axe de rotation. On peut donc déposer du fil au contact sur toute la surface de la pièce et dans toutes les directions possibles. L'ensemble est enfermé dans une enceinte isolée 33 équipée de hublots de regard 34. On peut ainsi travailler en atmosphère totalement neutre si nécessaire. Le poste de pilotage et de commande se trouve à l'extérieur.

La machine permet de réaliser des pièces de tôleries dans tout domaine et notamment dans celui de l'aéronautique quand il est nécessaire d'avoir des pièces composites de hautes performances à températures élevées.

## Revendications

1. Procédé de dépose au contact et à chaud de matériau composite fibré à matrice vitreuse par dépose au contact sur un mandrin (1) d'une pluralité de couches de matériau composite fibré orientées dans plusieurs directions, en recréant localement au niveau du point de contact des fils (5) sur les couches précédentes des conditions de température, pression et atmosphère telles que les fils imprégnés soient écrasés sur le matériau vitreux en fusion, caractérisé en ce qu'il consiste à réaliser des âmes (25, 26, 28) de formes variées par dépose au contact sur un mandrin, puis après enlèvement du mandrin à réaliser des peaux (23, 29) sur les âmes par dépose de fils (5) au contact, pour obtenir des pièces creuses et denses de formes complexes.

2. Procédé de dépose au contact selon la revendication 1, caractérisé en ce qu'il consiste à réaliser des peaux (35, 37, 38) par dépose de fils au contact sur des inserts amovibles (30, 36) pour obtenir des pièces creuses.

3. Procédé de dépose au contact selon la revendication 1, caractérisé en ce qu'il consiste à réaliser des peaux par dépose de fils au contact sur des inserts non amovibles pour obtenir des pièces sandwich.

4. Dispositif pour la mise en oeuvre du procédé de dépose selon la revendication 1, utilisant une tête de dépose montée sur un outil faisant partie d'une machine distributrice de fils et équipée de galets d'entraînement et d'une roulette de dépose du fil, ladite tête étant mobile en translation par rapport à l'interface tête-machine distributrice et rappelée contre le mandrin par un ressort, caractérisé en ce que sur le support (9) de la roulette de dépose (7) est monté un pistolet à plasma (11) dont la buse de sortie (12) est orientée en direction de la base de la roulette et du point d'application (5) du fil sur le mandrin (1).

5. Dispositif selon la revendication 4, caractérisé en ce que le support (9) fait partie de la tête de dépose (8) elle-même montée sur une glissière (16).

6. Dispositif selon la revendication 4, caractérisé en ce que le mandrin (1) et la roulette (7) sont enduits d'un matériau utilisé comme démoulant.

7. Dispositif selon les revendications 4 et 6, caractérisé en ce que le mandrin (1) et la roulette (7) sont réalisés en matériau de même nature qui évitent le collage des fils.

8. Dispositif selon la revendication 4, caractérisé en ce que le support (9) est équipé de deux galets d'entraînement motorisés (13) pour l'envoi de fils (5) provenant d'une bobine (6) sous la roulette (7) par l'intermédiaire d'un tube guide-fil (14).

## Claims

1. Hot contact method for placing a fibrated composite material with a vitreous mould, via the contact placing on a mandrel (1) a plurality of layers of a fibrated composite material orientated in several directions, thus locally recreating, at the level of the point of contact wires (5) on said layers in particular temperature, pressure and atmospheric conditions so that the impregnated wires are crushed on the molten vitreous material, wherein it consists of embodying cores (25, 26, 28) of varied shapes via the contact placing on a mandrel and then, after removal of the mandrel, of embodying skins (23, 29) on the cores by the contact placing of wires (5) so as to obtain finished dense hollow pieces.

2. Contact placing method according to claim 1, wherein it consists of embodying skins (35, 37, 38) via the contact placing of wires on movable inserts (30, 36) so as to obtain hollow pieces.

3. Contact placing method according to claim 1, wherein it consists of embodying skins via the contact placing of wires on non-movable inserts so as to obtain sandwich pieces.

4. Device to implement the placing method according to claim 1 and using a placing head mounted on a tool forming part of a wire distributing machine and equipped with drive rollers and a small wheel for placing the wire, said head being translation-mobile with respect to the distributing machine/head interface and closed against the mandrel by a spring, wherein a plasma gun is mounted on the support of the placing small wheel, the outlet nozzle of said gun being orientated in the direction of the base of the small wheel and the point of application of the wire on the mandrel.

5. Device according to claim 4, wherein the support (9) forms part of the placing head (8), itself mounted on a slide (16).

6. Device according to claim 4, wherein the mandrel (1) and the small wheel (7) are coated with a material used as a mould-removal agent.

7. Device according to claims 4 and 6, wherein the mandrel (1) and the small wheel (7) are made of a material of the same nature able to avoid glueing of the wires.

8. Device according to claim 4, wherein the support (9) is equipped with two motorized drive rollers (13) for sending wires (5) originating from a coil (6) under the small wheel by means of a wire guide tube (14).

## Patentansprüche

1. Verfahren zum Aufbauen eines Faserverbundwerkstoffes mit Glasmatrix mittels Kontaktieren und Erwärmen, wobei auf einem Dorn (1) eine Vielzahl von Schichten des Faserverbundwerkstoffes aufgebracht sind, indem im Bereich des Kontaktpunktes der Fasern (5) mit den vorherigen Schichten lokal die Temperatur, der Druck und die Atmosphäre so eingestellt werden, daß die imprägnierten Fäden in das aufgeschmolzene Material eingedrückt werden können, **dadurch gekennzeichnet**,
daß Träger (25,25,28) unterschiedlicher Form durch Aufbringen auf den Dorn hergestellt werden, und daß anschließend nach dem Entfernen des Dorns die Außenschichten (23,29) auf dem Träger dadurch hergestellt werden, daß die Fäden (5) aufgebracht werden, um kompakte Körper und Hohlkörper komplexer Formen zu erhalten.

2. Verfahren gemäß Patentanspruch 1, **dadurch gekennzeichnet**, daß Außenschichten (35, 37, 38) durch Aufbringen von Fäden auf bewegliche Einsatzteile (30, 36) erzielt werden, um Hohlkörper zu erhalten.

3. Verfahren gemäß Patentanspruch 1, **dadurch gekennzeichnet**, daß Außenschichten durch Aufbringen von Fäden auf nichtbewegliche Einsatzteile gebildet werden, um Sandwichkörper zu erhalten.

4. Vorrichtung für die Durchfuhrung des Verfahrens nach Patentanspruch 1, mit einem Kopf, der auf einem Gerät angebracht ist, das ein Bestandteil einer Einrichtung ist, die Fäden verteilt und mit Antriebsrollen und einer Rolle zum Aufbringen des Fadens ausgestattet ist, wobei dieser Kopf in bezug auf die Schnittstelle Kopf-/Verteilungseinrichtung translatorisch beweglich ist und durch eine Feder gegen den Dorn gedrückt wird, **dadurch gekennzeichnet**, daß auf dem Trägerelement (9) der Aufbringrolle (7) eine Plasmapistole (11) angebracht ist, deren Austrittsdüse (12) in Richtung der Basis der Rolle und des Auflagepunktes (5) des Fadens auf dem Dorn (1) ausgerichtet ist.

5. Vorrichtung gemäß Patentanspruch 4, **dadurch gekennzeichnet**, daß das Trägerelement (9) Bestandteil des Kopfes (8) ist, der wiederum auf einer Laufschiene (16) angebracht ist.

6. Vorrichtung gemäß Patentanspruch 4, **dadurch gekennzeichnet**, daß der Dorn (1) und die Rolle (7) mit einem als Abstreifmittel verwendeten Material überzogen sind.

7. Vorrichtung gemäß den Patentansprüchen 4 und 6, **dadurch gekennzeichnet**, daß der Dorn (1) und die Rolle (7) aus einem Material gleicher Art bestehen, die die Verklebung der Fäden vermeiden.

8. Vorrichtung gemäß Patentanspruch 4, **dadurch gekennzeichnet**, daß das Trägerelement (9) mit zwei motorisch angetriebenen Rollen (13) für den Transport von Fäden (5) ausgestattet ist, die von einer Spule (6) unter die Rolle (7) mittels eines Fadenführungsrohrs (14) geführt werden.
